# EUROPÄISCHE PATENTSCHRIFT

(11) **EP 2 631 043 B1**
(45) Veröffentlichungstag und Bekanntmachung des Hinweises auf die Patenterteilung: **23.07.2025**
(21) Anmeldenummer: 13000770.1
(22) Anmeldetag: 14.02.2013
(51) Int. Cl.: B25J 19/00, B25J 9/16

(54) **Verfahren und Vorrichtung zum Ausführen eines Manipulatorprozesses**
Method and apparatus for performing a manipulator process
Procédé et dispositif destinés à guider un processus de manipulateur

(30) Priorität: 21.02.2012 DE 102012003479
(43) Veröffentlichungstag der Anmeldung: 28.08.2013
(73) Patentinhaber: KUKA Deutschland GmbH, 86165 Augsburg (DE)
(72) Erfinder: Hofmann, Josef, 86709 Wolferstadt (DE)
(74) Vertreter: Schlotter, Alexander Carolus Paul

(56) Entgegenhaltungen:
- JP-A- 2000 308 990
- JP-A- H03 213 282

## Beschreibung

Die vorliegende Erfindung betrifft ein Verfahren und eine Vorrichtung zum Ausführen bzw. Steuern eines Manipulatorprozesses, wobei der Manipulator wenigstens ein Antriebsmittel mit einem Motor und einer Bremse aufweist.

Manipulatoren, insbesondere Roboter im industriellen Einsatz, weisen häufig Trajektorien auf, bei denen sich Bewegungsphasen und Haltephasen abwechseln. Während der Bewegungsphasen fährt der Manipulator auf einer Bahn. Während der Haltphasen verweilt der Manipulator in einer Pose, beispielsweise während ein Schweißpunkt gesetzt wird oder während des Wartens auf ein anzuförderndes Werkstück. Nach der Haltephase folgt wieder eine Bewegungsphase, die wieder von einer Haltephase abgelöst wird usw. Andere Beispiele sind Lackier- und Kommissionierprozesse, die von Industrierobotern derart automatisiert abgearbeitet werden.

Während der Haltephase wird der Manipulator durch seinen Antrieb aktiv gehalten, so dass Energie für das Aufbringen der Haltekräfte und das Offenhalten der Bremsen dissipiert wird.

Dieser Energiebedarf bedingt eine erhöhte Energieaufnahme während des Betriebs des bzw. der Manipulatoren und stellt eine wesentliche Effizienzgradbeeinträchtigung heutiger Manipulatoranordnungen dar.

Eine typische Maßnahme zur Verbesserung der Effizienz ist der Gewichtsausgleich bei Industrierobotern, wie er insbesondere in der EP 0 914 911 B1 vorgeschlagen wird. Ein solcher Gewichtsausgleich bewirkt eine Reduktion der Unterschiede der potentiellen Energien bei unterschiedlichen Roboterposen, so dass, vorzugsweise in der Grundachse des Roboters, schwächere Antriebe und Bremsen benötigt werden, um bei gleichen Bewegungen weniger Energie zu verbrauchen.

Die DE 103 940 302 T5 offenbart eine Steuerung zum Schließen und Öffnen von Roboterbremsen abhängig von einer Entfernung zwischen einem Anschlag und einem Bewegungsteil.

Die EP 1 974 870 A1 offenbart eine Steuerung einer Bremse für Industrieroboter, wobei die Bremse mit einem Schalter zum Schließen und Öffnen ausgestattet ist, welcher eine Ansteuerung der Bremse unabhängig von anderen Bremsen ermöglicht.

Aus der JP H03 213282 A ist ein Verfahren zum Ausführen eines Manipulatorprozesses bekannt. Nach einem anfänglichen Erregen eines Servomortors und einem anschließenden Lösen einer Bremse werden alle Bewegungskommadnos eines Roboterprogramms abgearbeitet. Falls am Ende des Roboterprogramms ein Standby-Kommando vorgesehen ist, wird die Bremse geschlossen und anschließend der Motor ausgeschaltet.

Aufgabe der vorliegenden Erfindung ist es, einen Manipulatorprozess zu verbessern.

Diese Aufgabe wird durch ein Verfahren mit den Merkmalen des Anspruchs 1 gelöst. Anspruch 12 stellt eine Vorrichtung zum Durchführen eines erfindungsgemäßen Verfahrens unter Schutz, Anspruch 13 schützt ein Computerprogramm, welches ein erfindungsgemäßes Verfahren ausführt, Anspruch 14 ein Computerprogrammprodukt, insbesondere ein Speichermedium, mit einem solchen Computerprogramm. Die Unteransprüche betreffen bevorzugte Weiterbildungen.

Bei einem erfindungsgemäßen Verfahren wird ein Manipulatorprozess, der zwei oder mehrere Manipulatorposen umfasst, von einem oder mehreren Manipulatoren, insbesondere Industrierobotern, ausgeführt. Ein Manipulator ist vorzugsweise in mehreren Freiheitsgraden, insbesondere vier, sechs oder sieben Freiheitsgraden beweglich, wobei ein Freiheitsgrad insbesondere durch eine Achse des Manipulators realisiert wird. Eine oder mehrere Achsen des Manipulators sind jeweils mit einem oder mehreren Antriebsmitteln ausgestattet, welche einen oder mehrere Motoren und eine oder mehrere Bremsen, insbesondere wenigstens eine Feststellbremse, d.h. eine Bremse, die energielos geschlossen ist, aufweisen.

Während einer Bewegungsphase wird eine Manipulatorpose angefahren. Ein Manipulatorprozess im Sinne der vorliegenden Erfindung umfasst einen Bewegungsablauf des bzw. der Manipulatoren, nachfolgend "Trajektorie" genannt, kann insbesondere dessen Beschreibung umfassen. Zusätzlich kann ein Manipulatorprozess Anweisungen, Regeln und/oder Schnittstellen aufweisen, insbesondere zur Ansteuerung eines Werkzeugs, zur Kommunikation und/oder zum (Um-)Planen des Bewegungsablaufes. Die Trajektorie kann insbesondere in funktionaler und/oder tabellarischer Form repräsentiert sein, insbesondere in der Manipulatorsteuerung. Eine Manipulatorpose kann insbesondere durch einen Bediener vorab programmiert und/oder kommandiert, extern vorgegeben und/oder während des Manipulatorprozesses generiert worden sein. Eine Manipulatorpose kann insbesondere eine Position und/oder eine Orientierung des Manipulators umfassen. Eine Manipulatorpose ist vorzugsweise durch Koordinaten im, insbesondere kartesischen, Arbeitsraum des Manipulators oder im Gelenkraum des Manipulators beschrieben oder als Quaternionen repräsentiert. Vorzugsweise ist die Trajektorie bis zu einer anzufahrenden Manipulatorpose, insbesondere teilweise, vorgegeben. Insbesondere kann durch einen Interpolator daraus eine kontinuierliche oder diskrete Soll-Bahn realisiert werden, insbesondere in funktionaler und/oder tabellarischer Form.

Am Ende der Bewegungsphase werden ein oder mehrere Antriebsmittel, vorzugsweise der gesamte Manipulator, stillgesetzt, so dass die durch die stillgesetzten Antriebsmittel definierten Achsen keine Bewegungen mehr ausführen. Ein Stillsetzen erfolgt vorzugsweise durch die Motoren und/oder durch eine oder mehrere geschlossene Bremsen des entsprechenden Antriebsmittels. Nach dem Stillsetzen bzw. im Stillstand wird eine Haltekraft für die entsprechende Achse solange allein durch die Motoren erbracht, bis eine oder mehrere geschlossene Bremsen diese Haltekraft oder zumindest einen Teil dieser Haltekraft übernehmen. Zur kompakteren Darstellung wird vorliegend auch ein (Dreh)Moment, d.h. ein antiparalleles Kräftepaar, verallgemeinernd als Kraft bezeichnet.

Erfindungsgemäß werden nach dem Stillsetzen bzw. Stillstand eine oder mehrere, insbesondere alle Bremsen eines oder mehrerer, insbesondere aller Antriebsmittel des Manipulators geschlossen. Gleichermaßen können eine oder mehrere Bremsen eines oder mehrerer Antriebsmittel des Manipulators geschlossen sein, während eine oder mehrere Bremsen eines anderen oder andere Antriebsmittel noch geöffnet sind. Bei geschlossener Bremse bzw. geschlossenen Bremsen wird die Haltekraft, welche zum Stillstand der entsprechenden Achse des Antriebsmittels notwendig und/oder hinreichend ist, teilweise oder vollständig durch die Bremse(n) eingeprägt. Entsprechend wird nach dem Schließen einer oder mehrerer Bremsen eines oder mehrerer Antriebsmittel eine Energieversorgung dieses Antriebsmittels teilweise oder vollständig reduziert. Vorzugsweise wird der elektrische Strom zum Aufbringen der Haltekraft, durch den ein oder mehrere Motoren mit Energie versorgt werden, teilweise oder vollständig reduziert.

Am Ende einer Haltephase wird die Energiezufuhr wenigstens eines Antriebsmittels wieder erhöht, insbesondere so, dass die bisher durch die Bremse oder die Bremsen des Antriebsmittels erzeugte Haltekraft durch einen oder mehrere Motoren aufgebracht werden kann und vorzugsweise so, dass die durch die Antriebsmittel betriebenen Achsen entsprechend der Bahn- und oder Zielvorgaben verfahren werden können.

Nach dieser Erhöhung der Energiezufuhr werden eine oder mehrere, insbesondere alle Bremsen eines oder mehrerer, insbesondere aller Antriebsmittel des Manipulators geöffnet, so dass der Manipulator sich in den Achsen wieder bewegen kann.

Danach wird eine weitere Manipulatorpose, insbesondere auf einer Soll-Bahn, angefahren. In einer bevorzugten Ausführung wird wenigstens ein Antriebsmittel des Manipulators bewegt, während eine Bremse eines anderen Antriebsmittels geschlossen ist.

Ein Antriebsmittel im Sinne der vorliegenden Erfindung weist einen oder mehrere Motoren und eine oder mehrere Bremsen auf. Vorzugsweise ermöglicht ein Antriebsmittel eine Bewegung und/oder eine Verzögerung einer Manipulatorachse, insbesondere um einen Freiheitsgrad. Zusätzlich oder alternativ kann ein Antriebsmittel eine Umhüllung aufweisen, die Motor(en) und Bremse(n) wenigstens teilweise umgibt und von der Umgebung abgrenzt. Besonders bevorzugt sind ein oder mehrere Antriebsmittel in einem Manipulator zumindest teilweise integriert. Ein Antriebsmittel kann zusätzlich oder alternativ ein Getriebe aufweisen, um ein vom Motor bereitgestelltes Moment zu über- oder zu untersetzen. Bevorzugt weist ein Antriebsmittel antriebsseitig und/oder abtriebsseitig einen oder mehrere Sensoren auf, insbesondere einen oder mehrere Positionssensoren, Bewegungssensoren und/oder Kraftsensoren.

Ein Motor im Sinne der vorliegenden Erfindung kann insbesondere ein Elektromotor sein. Ein Elektromotor kann insbesondere zur Umwandlung von elektrischer in mechanische Energie eingerichtet sein. Ein Elektromotor wird vorzugsweise mit Gleich- und/oder Wechselstrom betrieben, wobei der Wechselstrom insbesondere eine bestimmte Frequenz und/oder eine bestimmte Amplitude aufweisen kann. Vorzugsweise ist ein Elektromotor als bürstenloser Gleichstrommotor, Synchronmaschine oder als Asynchronmaschine ausgeführt. Insbesondere kann ein Motor eine elektronische Kommutierung aufweisen. Bevorzugt ist ein Motor mit einem Umrichter und/oder einem PWM-Verstärker ausgestattet.

Eine Bremse im Sinne der vorliegenden Erfindung dient vorzugsweise zum Aufbringen eines Haltemoments oder eines Teils einer Haltekraft zum Halten einer Manipulatorachse im Stillstand. Wie vorstehend erläutert, wird vorliegend insbesondere auch ein (Dreh)Moment verallgemeinernd als Kraft bezeichnet.

Vorteilhafterweise wird durch ein Halten einer oder mehrerer Manipulatorachsen im Stillstand durch eine Bremse weniger Energie benötigt als durch ein Halten dieser Manipulatorachsen durch den oder die entsprechenden Motoren des Antriebsmittels. Dadurch ergibt sich eine Effizienzverbesserung, wenn ein Stillstand durch eine solche Bremse bewirkt wird und nicht oder nicht ausschließlich durch einen Motor. Zusätzlich kann eine Bremse zum Abbremsen einer Geschwindigkeit der Manipulatorachse eingerichtet sein. Eine Bremse ist vorzugsweise als Sicherheitsbremse ausgeführt. Eine Sicherheitsbremse schließt beim Abfallen einer Energiezufuhr unter einem Grenzwert und bringt die entsprechende Haltekraft auf, insbesondere ohne weitere Energiezufuhr. Bevorzugt wird zum Schließen wenigstens einer Bremse eine Energiezufuhr zur Bremse vollständig unterbrochen. Durch eine solche Bremse ergibt sich im Stillstand eine weitere Effizienzverbesserung, wenn der Manipulator durch eine oder mehrere Bremsen und nicht durch einen Motor gehalten wird. Eine Bremse kann insbesondere als Federdruckbremse, Keilbremse, Wirbelstrombremse, elektromotorische Bremse, (Permanent-) Magnetbremse, Magnetpulverbremse und/oder als pneumatische Bremse ausgeführt sein.

Eine Energieversorgung im Sinne der vorliegenden Erfindung versorgt ein oder mehrere, insbesondere alle Antriebsmittel eines oder mehrerer Manipulatoren insbesondere mit elektrischer Energie. Die Energieversorgung kann aus einem, insbesondere öffentlichen, Energienetz und/oder einem autonomen Energienetz gespeist werden. Zusätzlich oder alternativ kann sich eine Energieversorgung aus wenigstens einer Batterieanordnung und/oder einem alternativen Energiespeicher speisen, insbesondere einem mechanischen Energiespeicher. Vorzugsweise sind mehrere Antriebsmittel, insbesondere alle Antriebsmittel eines oder mehrerer Manipulatoren mit einer Energieversorgung verbunden. Besonders vorzugsweise weist die Energieversorgung einen Zwischenkreis auf, welcher über eine Zwischenkreisspannung Energie für die Motoren, die Bremsen und/oder weitere Komponenten eines oder mehrerer Antriebsmittel, insbesondere eines oder mehrerer Manipulatoren bereitstellt. Vorzugsweise ist die Energieversorgung mit einer Steuerung verbunden. Die Energieversorgung ist dazu eingerichtet, eine Energiezufuhr zu einem oder mehreren Antriebsmitteln, insbesondere zu einem oder mehreren Motoren und/oder zu einer oder mehreren Bremsen dieser Antriebsmittel zu reduzieren und/oder zu erhöhen. Vorzugsweise wird durch die Energieversorgung hinreichend Energie zum Betreiben einer oder mehrerer Antriebsmittel bereitgestellt, besonderes bevorzugt zum Betrieb eines oder mehrerer Manipulatoren, insbesondere samt zusätzlicher Peripherie, z.B. Steuerung, Sicherheitszelle, Werkzeug, Beleuchtungs- und/oder Kommunikationseinrichtungen.

In einer bevorzugten Ausführung werden die vorstehend erläuterten Schritte ein- oder mehrfach wiederholt, so dass der Manipulator eine Trajektorie mit zwei oder mehr Haltephasen abfährt, während derer eine oder mehrere Bremsen geschlossen werden. Dadurch kann sich insbesondere der Vorteil ergeben, Haltephasen verschiedenster Ausprägungen für Energieeinsparungen zu nutzen.

In einer bevorzugten Ausführung wird die Bremse auf Basis wenigstens eines von mehreren Kriterien geschlossen und/oder geöffnet. Nach einem ersten Aspekt wird die Bremse auf Basis eines Zustandskriteriums geschlossen und/oder geöffnet. Ein Zustand im Sinne der vorliegenden Erfindung kann ein physikalischer Zustand des Manipulators oder einer externen Vorrichtung sein und/oder eine Kombination aus mehreren solchen Zuständen. Zusätzlich oder alternativ kann ein Zustand durch eine Konfiguration von Eigenschaften gekennzeichnet sein, insbesondere des Manipulators und/oder einer externen Vorrichtung. Bevorzugt kann ein Zustand durch eine Konfiguration eines Zustandsdiagramms und/oder einer Ablaufsteuerung bestimmt sein, welche insbesondere dem Betreiben eines Manipulators und/oder einer externen Vorrichtung dienen und insbesondere den Status eines Arbeitsablaufes beschreiben. Insbesondere kann ein Zustand ein Zustand eines Manipulators, einer Manipulatorsteuerung, eines Manipulatorprozesses, eines Werkzeugs des Manipulators, einer Leitsteuerung und/oder einer Vorrichtung aus der Umgebung des Manipulators sein, die mit dem Manipulator zusammenwirkt. Durch ein Zustandskriterium ergibt sich der Vorteil, dass die Bremse bei Auftreten einer speziellen Konfiguration des Manipulators oder dessen Umwelt geschlossen und/oder geöffnet werden kann.

Nach einem zweiten Aspekt dieser Ausführung wird die Bremse auf Basis eines Signalkriteriums geschlossen und/oder geöffnet. Ein Signal im Sinne der vorliegenden Erfindung kann insbesondere ein Zeichen mit einer bestimmten Bedeutung sein, die das Signal vorzugsweise durch eine zuvor getroffene Verabredung oder durch eine Vorschrift erhält. Insbesondere kann durch ein Signal eine Information kommuniziert werden. Eine solche Information kann vorzugsweise Daten über den Manipulator, insbesondere über dessen Komponenten und/oder über externe Vorrichtungen enthalten. Zusätzlich oder alternativ kann eine solche Information Daten eines Bearbeitungsverfahrens enthalten. Besonders bevorzugt transportiert ein Signal Information einer Manipulatorsteuerung und/oder einer externen Steuerung. Zusätzlich oder alternativ enthält ein Signal Informationen über Anweisungen eines oder mehrerer Bediener, insbesondere eine Bremsanweisung, und/oder über deren Zustand. Vorzugsweise enthält ein Signal Informationen, dass sich Personen und/oder Gegenstände im Gefahrenbereich des oder der Manipulatoren aufhalten. Insbesondere kann ein Signal Information über die Aufmerksamkeit eines sich in der Nähe des Manipulators befindlichen Bedieners enthalten und zum Beispiel bei Unaufmerksamkeit des Bedieners eine entsprechende Stopp-Anweisung kommunizieren. Insbesondere kann ein Signal ein Signal einer Manipulatorsteuerung, eines Manipulatorprozesses, einer Werkzeugsteuerung, einer Leitsteuerung und/oder einer Vorrichtung aus der Umgebung des Manipulators sein, die mit dem Manipulator zusammenwirkt. Durch ein Signalkriterium ergibt sich insbesondere der Vorteil, dass die Bremse durch einfach interpretierbare Information angesteuert werden kann, wobei diese einfache Information insbesondere eine Abbildung einer komplexeren Information darstellen kann.

Nach einem dritten Aspekt dieser Ausführung wird die Bremse auf Basis eines Zeitkriteriums geschlossen und/oder geöffnet. Eine Zeit im Sinne der vorliegenden Erfindung kann eine absolute Zeit oder eine relative Zeit sein. Vorzugsweise ist eine Zeit eine Prozesszeit eines Prozesses des Manipulators oder einer externen Vorrichtung. Zusätzlich oder alternativ kann eine Zeit eine Haltezeit sein, insbesondere eine Haltezeit, die seit einem Stillsetzen, vorzugsweise eines oder mehrerer Antriebsmittel eines Manipulators und/oder einer externen Vorrichtung, verstrichen ist. Vorzugsweise ist eine Zeit eine Pausenzeit. Eine Pausenzeit beschreibt vorzugsweise die Dauer einer Haltephase eines Manipulators und/oder einer externen Vorrichtung, zwischen zwei Bewegungsphasen. Eine Pausenzeit kann insbesondere die Dauer zwischen dem Schließen einer Bremse und dem Öffnen einer Bremse beschreiben. Durch ein Zeitkriterium bietet sich vorteilhaft die Möglichkeit eine Schließen-Öffnen-Anweisung durch eine einzige Information, insbesondere die Dauer einer Haltephase, zu übermitteln.

Nach einer bevorzugten Ausführung werden zwei oder mehr Kriterien ausgewertet, um Bremse(n) eines oder mehrerer Antriebsmittel zu schließen und/oder zu öffnen. Die Auswertung kann insbesondere parallel und/oder verkettet, insbesondere seriell durchgeführt werden. Durch eine parallele Auswertung zweier oder mehrerer Kriterien kann vorteilhaft die Zuverlässigkeit des Bremsbetriebes erhöht werden. Durch eine serielle Auswertung zweier oder mehrerer Kriterien kann vorteilhaft das Schließen und/oder Öffnen einer Bremse genauer kontrolliert werden. Eine parallele Auswertung kann insbesondere durch eine "ODER"-Verknüpfung der Kriterien implementiert sein, eine serielle Auswertung durch eine "UND"-Verknüpfung der Kriterien.

Nach einer bevorzugten Ausführung wird wenigstens ein Kriterium, welches zum Schließen und/oder Öffnen der Bremse ausgewertet wird, während des Manipulatorprozesses geändert. Bevorzugt wird die Änderung des Kriteriums durch einen Lernprozess gesteuert, welcher insbesondere in der Manipulatorsteuerung und/oder auf einer externen Vorrichtung durchgeführt wird. Besonders bevorzugt ergibt sich eine Zeit, insbesondere eine Pausenzeit als Ergebnis eines maschinellen Lernprozesses. Insbesondere kann der Lernprozess einen oder mehrere Manipulatorprozesse beobachten und auf Basis der beobachteten Manipulatorprozesse eine Länge einer zukünftigen Pausenzeit abschätzen. Die Änderung des Kriteriums kann sowohl ereignisgesteuert sein, insbesondere durch ein neu vorliegendes Lernergebnis, und/oder periodisch und/oder kontinuierlich. Durch Änderung eines Kriteriums während des Manipulatorprozesses kann sich insbesondere der Vorteil ergeben, dass redundante Information innerhalb der Trajektorie, z.B. ähnliche, insbesondere gleiche Haltephasen, zur Verbesserung der Effizienz genutzt werden können, insbesondere ohne dazu vorab die Dauer der Haltephasen kennen zu müssen.

In einer bevorzugten Ausführung überwacht und/oder steuert eine Sicherheitseinrichtung ein Öffnen und/oder Schließen der Bremsen in sicherer Technik. Dazu genügt die Architektur der Ansteuerung einer oder mehrerer Bremsen vorzugsweise einem Sicherheitsintegritätslevel wie es z.B. in den Normen IEC 61508 oder EN ISO 13849 spezifiziert ist. Eine sichere Bremsenansteuerung bietet den Vorteil eines sicheren Betriebshaltes, insbesondere einer oder mehrerer Achsen, vorzugsweise des gesamten Manipulators. Ein sicherer Betriebshalt kann für bestimmte Manipulatorprozesse notwendig sein, insbesondere, wenn diese Interaktionen mit einem oder mehreren Menschen aufweisen.

Weitere Vorteile und Merkmale ergeben sich aus den Unteransprüchen und Ausführungsbeispielen. Hierzu zeigt, teilweise schematisiert:
- Fig. 1:: den zeitlichen Verlauf der Geschwindigkeit und des Leistungsbedarfs einer Beispieltrajektorie eines Manipulatorprozesses nach einer Ausführung der vorliegenden Erfindung
- Fig. 2:: den Ablauf eines Verfahrens zur Steuerung eines Manipulators nach einer Ausführung der vorliegenden Erfindung.

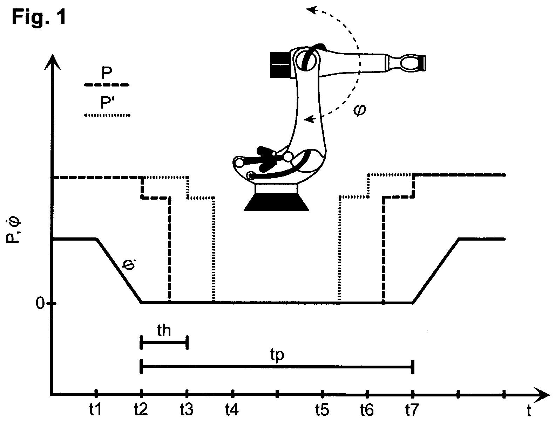

Fig. 1 zeigt einen Ausschnitt aus einer Trajektorie eines Manipulatorprozesses, der durch einen Industrieroboter ausgeführt wird, wobei die Geschwindigkeit über der Zeit dargestellt ist sowie zwei verschiedene Leistungsverläufe P und P' gemäß zweier Zeitkriterien. Bis zum Zeitpunkt t=1 verfährt die Achse 3 des Roboters mit einer positiven, konstanten Geschwindigkeit *φ̇* >0. Zum Zeitpunkt t1 wird ein Stopp kommandiert und die Geschwindigkeit der Achse 3 verringert sich linear bis auf *φ̇* =0. Ab dem Zeitpunkt t2 ist die Achse 3 des Roboters im Stillstand.

Das erste Zeitkriterium nutzt die Haltezeit th zur Entscheidung, die Bremsen und den Motor zu aktivieren und/oder zu deaktivieren. Der Leistungsverlauf ist durch die gepunktete Linie dargestellt. Nach Ablauf der Haltezeit th wird die Sicherheitsbremse des Roboters zum Zeitpunkt t3 stromlos geschaltet und fällt ein. Dadurch bedingt reduziert sich zum Zeitpunkt t3 die Leistungsaufnahme P' der Achse 3 um die zum Öffnen der Bremse notwendige Leistung P'. Nach dem Schließen der Bremse wird auch der Motor stromlos geschaltet. Damit ist die komplette Antriebseinheit der Achse 3 des Roboters stromlos. Bis zur Aktivierung der Leistungszufuhr für den Motor wird keine Energie aufgenommen. Zum Zeitpunkt t6 werden die Bremsen geöffnet, dies führt zu einem entsprechenden Anstieg des Leistungsbedarfs P' und das Haltemoment wird während t>t6 und t<t7 wieder vom Motor aufgebracht. Die neue Bewegungsphase startet zum Zeitpunkt t7, ab dem die Geschwindigkeit der Achse 3 wieder linear zunimmt.

Das zweite Zeitkriterium nutzt die Pausenzeit tp zur Entscheidung, die Bremsen und den Motor zu aktivieren und/oder zu deaktivieren. Der Leistungsverlauf ist durch die gestrichelte Linie dargestellt. Das Schließen der Bremse der Achse 3 wird mit der kompletten Pausenzeit tp des Industrieroboters synchronisiert. Die Bremse wird zum Zeitpunkt t2 geschlossen und erst zum Zeitpunkt t7 wieder geöffnet. Nach Überprüfung der betriebsgemäßen Schließung der Bremsen wird danach auch die Leistungszufuhr zum Motor unterbrochen. Bis die Energiezufuhr wieder aktiviert wird, wird die Achse 3 allein von der Bremse gehalten. Die Energiezufuhr des Motors wird zum Zeitpunkt t6 wieder aktiviert.

Die abgebildeten Zeitkriterien sind vorzugsweise mit anderen Kriterien, z.B. Signalkriterien und/oder Zustandskriterien kombiniert. In nicht dargestellten bevorzugten Ausführungen ist die Entscheidung zum Schließen und/oder Öffnen der Bremsen von einem oder mehreren Signalkriterien und/oder einem oder mehrerer Zustandskriterien abhängig. Insbesondere können Signal- und/oder Zustandskriterien miteinander kombiniert sein.

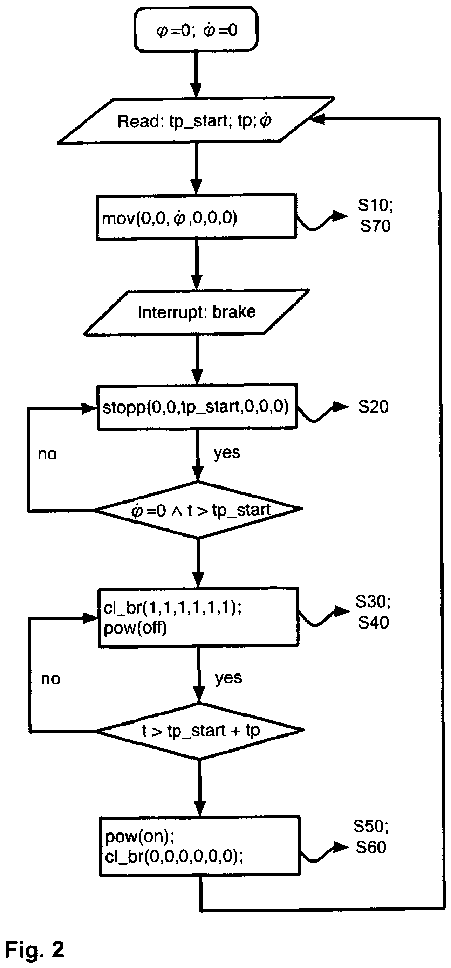

Fig. 2 zeigt ein Flussdiagramm eines Manipulatorprozesses mit parametrisierter Bremsenansteuerung zur Verbesserung der Effizienz des Manipulatorprozesses. Der Manipulator befindet sich anfangs in einer Position, bei der die Auslenkung der Achse 3 null beträgt, *φ* = 0, und auch die Geschwindigkeit null ist, *φ̇* =0. Zunächst erfolgt danach eine Parametrierung einer Pause durch den Startzeitpunkt tp_start und die Dauer der Pause tp. Außerdem wird die Bewegungsgeschwindigkeit *φ̇* ausgelesen.

Danach wird die Achse 3 des Roboter durch die Funktion mov() bewegt. Auf ein Signalereignis (Interrupt) wird ein Bremsvorgang durch die Funktion stopp() so kommandiert, dass die Achse 3 zum Zeitpunkt tp_start zum Stillstand kommt. Die Bremsen werden eingeschaltet, wenn die Geschwindigkeit des Roboters *φ̇* =0 beträgt und die Zeit tp_start überschritten ist. Nach Schließen der Bremsen wird durch pow(off) die Energiezufuhr unterbrochen. Nach Ablauf der Pausendauer wird zunächst die Energiezufuhr wieder aktiviert, danach werden die Bremsen geöffnet. Danach erfolgt eine Aktualisierung der Parameter und die nächste Bewegungsphase.

### Bezugszeichenliste

- t: Zeit
- t1-t7: absolute Zeitpunkte
- th: Haltezeit
- tp: Pausenzeit
- *φ*: Position der Achse 3 des Manipulators
- *φ̇*: Geschwindigkeit der Achse 3
- P: Leistungsaufnahme der Achse 3 beim ersten Zeitkriterium
- P': Leistungsaufnahme der Achse 3 beim zweiten Zeitkriterium

## Patentansprüche

1. Verfahren zum Ausführen eines Manipulatorprozesses, der wenigstens zwei Manipulatorposen aufweist, durch einen Manipulator, insbesondere Roboter, der wenigstens ein Antriebsmittel aufweist, welches einen Motor und eine Bremse aufweist, mit den Schritten:
| | |
|---|---|
| (S10) | Anfahren einer Manipulatorpose; |
| (S20) | Stillsetzen wenigstens eines Antriebsmittels; |
| (S30) | Schließen wenigstens einer Bremse dieses Antriebsmittels; |
| (S40) | Reduktion der Energiezufuhr des Antriebsmittels; |
| (S50) | Erhöhen der Energiezufuhr des Antriebsmittels; |
| (S60) | Öffnen der geschlossenen Bremse; |
| (S70) | Anfahren einer weiteren Manipulatorpose; |
wobei der Manipulatorprozess einen Bewegungsablauf des Manipulators umfasst.

2. Verfahren nach Anspruch 1,
**dadurch gekennzeichnet, dass**
die Schritte (S20) - (S70) wiederholt werden.

3. Verfahren nach Anspruch 1,
**dadurch gekennzeichnet, dass**
die Bremse auf Basis wenigstens eines der folgenden Kriterien geschlossen und/oder geöffnet wird:
- eines Zeitkriteriums;
- eines Signalkriteriums;
- eines Zustandskriteriums.

4. Verfahren nach Anspruch 3,
**dadurch gekennzeichnet, dass**
die Bremse auf Basis wenigstens zwei der Kriterien geschlossen und/oder geöffnet wird.

5. Verfahren nach Anspruch 3 oder 4,
**dadurch gekennzeichnet, dass**
ein Zeitkriterium auf Basis wenigstens einer der folgenden Zeiten vorgegeben ist:
- einer Absolutzeit;
- einer Prozesszeit;
- einer Haltezeit seit dem Stillsetzen (S20);
- einer Pausenzeit zwischen dem Stillsetzen (S20) und dem Öffnen (S60) der Bremse.

6. Verfahren nach einem der Ansprüche 3 bis 5,
**dadurch gekennzeichnet, dass**
ein Signalkriterium auf Basis wenigstens einem der folgenden Signale vorgegeben ist:
- einem Signal einer Manipulatorsteuerung;
- einem Signal eines Manipulatorprozesses;
- einem Signal einer Werkzeugsteuerung;
- einem Signal einer Leitsteuerung;
- einem Signal einer Vorrichtung aus der Umgebung des Manipulators, die mit dem Manipulator zusammenwirkt.

7. Verfahren nach einem der Ansprüche 3 bis 6,
**dadurch gekennzeichnet, dass**
ein Zustandskriterium auf Basis wenigstens einer der folgenden Zustände vorgegeben ist:
- eines Zustands des Manipulators;
- eines Zustands einer Manipulatorsteuerung;
- eines Zustands eines Manipulatorprozesses;
- eines Zustands eines Werkzeugs des Manipulators
- eines Zustands einer Leitsteuerung;
- eines Zustands einer Vorrichtung aus der Umgebung des Manipulators, die mit dem Manipulator zusammenwirkt.

8. Verfahren nach einem der Ansprüche 3 bis 7,
**dadurch gekennzeichnet, dass**
wenigstens ein Kriterium während des Manipulatorprozesses geändert wird, insbesondere adaptiert wird.

9. Verfahren nach einem der vorherigen Ansprüche,
**dadurch gekennzeichnet, dass**
sich wenigstens ein weiteres Antriebsmittel des Manipulators bewegt, während die Bremse geschlossen ist.

10. Verfahren nach einem der vorherigen Ansprüche,
**dadurch gekennzeichnet, dass**
zum Schließen wenigstens einer Bremse eine Energiezufuhr zur Bremse verringert, insbesondere unterbrochen, wird.

11. Verfahren nach einem der vorherigen Ansprüche,
**dadurch gekennzeichnet, dass**
eine Sicherheitseinrichtung ein Öffnen und Schließen der Bremsen überwacht.

12. Vorrichtung zum Steuern eines Manipulators, insbesondere eines Roboters,
**dadurch gekennzeichnet, dass**
die Vorrichtung zur Durchführung eines Verfahrens nach einem der vorhergehenden Ansprüche eingerichtet ist.

13. Computerprogramm, das ein Verfahren nach einem der Ansprüche 1 bis 11 ausführt, wenn es in einer Vorrichtung nach Anspruch 12 abläuft.

14. Computerprogrammprodukt mit Programmcode, der auf einem maschinenlesbaren Träger gespeichert ist und ein Computerprogramm nach Anspruch 13 umfasst.

## Claims

1. A method of carrying out a manipulator process, which comprises at least two manipulator poses, by a manipulator, in particular by a robot, which comprises at least one drive means which comprises a motor and a brake, wherein the method comprises the following steps:
| | |
|---|---|
| (S10) | moving towards a manipulator pose; |
| (S20) | stopping at least one drive means; |
| (S30) | applying at least one brake of said drive means; |
| (S40) | reducing the supply of energy to the drive means; |
| (S50) | increasing the supply of energy to the drive means; |
| (S60) | releasing the applied brake; |
| (S70) | moving towards a further manipulator pose; |
wherein the manipulator process comprises a movement sequence of the manipulator.

2. The method according to claim 1,
**characterised in that**
the steps (S20) - (S70) are repeated.

3. The method according to claim 1,
**characterised in that**
the brake is applied and / or released on the basis of at least one of the following criteria:
- a time criterion;
- a signal criterion;
- a status criterion.

4. The method according to claim 3,
**characterised in that**
the brake is applied and / or released on the basis of at least two of the criteria.

5. The method according to claim 3 or 4,
**characterised in that**
a time criterion is specified on the basis of at least one of the following times:
- an absolute time;
- a process time;
- a holding time since the stopping (S20);
- a pause time between the stopping (S20) and the releasing (S60) of the brake.

6. The method according to any one of claims 3 to 5,
**characterised in that**
a signal criterion is specified on the basis of at least one of the following signals:
- a signal from a manipulator control facility;
- a signal from a manipulator process;
- a signal from a tool control facility;
- a signal from a master control facility;
- a signal from a device in the surroundings of the manipulator, which device interacts with the manipulator.

7. The method according to any one of claims 3 to 6,
**characterised in that**
a state criterion is specified on the basis of at least one of the following states:
- a state of the manipulator;
- a state of a manipulator control facility;
- a state of a manipulator process;
- a state of a tool of the manipulator;
- a state of a master control facility;
- a state of a device in the surroundings of the manipulator, which device interacts with the manipulator.

8. The method according to any one of claims 3 to 7,
**characterised in that**
at least one criterion is changed, in particular adapted, during the manipulator process.

9. The method according to any one of the preceding claims,
**characterised in that**
at least one further drive means of the manipulator moves while the brake is applied.

10. The method according to any one of the preceding claims,
**characterised in that**
in order to apply at least one brake, a supply of energy to the brake is reduced, in particular interrupted.

11. The method according to any one of the preceding claims,
**characterised in that**
a safety device monitors the releasing and the applying of the brakes.

12. A device for controlling a manipulator, in particular a robot,
**characterised in that**
the device is set up for carrying out a method according to any one of the preceding claims.

13. A computer program which executes a method according to any one of claims 1 to 11 when it is run in a device according to claim 12.

14. A computer program product which comprises a program code which is stored on a machine-readable medium and which comprises a computer program according to claim 13.

## Revendications

1. Procédé d'exécution d'un processus de manipulateur, qui présente au moins deux positions de manipulateur, par un manipulateur, en particulier un robot, qui présente au moins un moyen d'entraînement, lequel présente un moteur et un frein, avec les étapes :
(S10) d'atteinte d'une position de manipulateur ;
(S20) d'arrêt d'au moins un moyen d'entraînement ;
(S30) de fermeture d'au moins un frein dudit moyen d'entraînement ;
(S40) de réduction de l'apport d'énergie du moyen d'entraînement ;
(S50) d'augmentation de l'apport d'énergie du moyen d'entraînement ;
(S60) d'ouverture du frein fermé ;
(S70) d'atteinte d'une autre position de manipulateur ;
dans lequel le processus de manipulateur comprend un déroulement de mouvement du manipulateur.

2. Procédé selon la revendication 1,
**caractérisé en ce que**
les étapes (S20) - (S70) sont répétées.

3. Procédé selon la revendication 1,
**caractérisé en ce que**
le frein est fermé et/ou ouvert sur la base d'au moins un des critères suivants :
- un critère temporel ;
- un critère de signal ;
- un critère d'état.

4. Procédé selon la revendication 3,
**caractérisé en ce que**
le frein est fermé et/ou ouvert sur la base d'au moins deux des critères.

5. Procédé selon la revendication 3 ou 4,
**caractérisé en ce que**
un critère de temps est spécifié sur la base d'au moins un des temps suivants :
- un temps absolu ;
- un temps de processus ;
- un temps de maintien depuis l'arrêt (S20) ;
- un temps de pause entre l'arrêt (S20) et l'ouverture (S60) du frein.

6. Procédé selon l'une quelconque des revendications 3 à 5,
**caractérisé en ce que**
un critère de signal est spécifié sur la base d'au moins un des signaux suivants :
- un signal d'une commande de manipulateur ;
- un signal d'un processus de manipulateur ;
- un signal d'une commande d'outil ;
- un signal d'une commande principale ;
- un signal d'un dispositif provenant de l'environnement du manipulateur qui coopère avec le manipulateur.

7. Procédé selon l'une quelconque des revendications 3 à 6,
**caractérisé en ce que**
un critère d'état est spécifié sur la base d'au moins un des états suivants :
- un état du manipulateur ;
- un état d'une commande de manipulateur ;
- un état d'un processus de manipulateur ;
- un état d'un outil du manipulateur ;
- un état d'une commande principale ;
- un état d'un dispositif provenant de l'environnement du manipulateur qui coopère avec le manipulateur.

8. Procédé selon l'une quelconque des revendications 3 à 7,
**caractérisé en ce que**
au moins un critère est modifié, en particulier est adapté, pendant le processus de manipulateur.

9. Procédé selon l'une quelconque des revendications précédentes,
**caractérisé en ce que**
au moins un autre moyen d'entraînement du manipulateur se déplace alors que le frein est fermé.

10. Procédé selon l'une quelconque des revendications précédentes,
**caractérisé en ce que**
pour fermer au moins un frein, un apport en énergie vers le frein est réduit, en particulier est interrompu.

11. Procédé selon l'une quelconque des revendications précédentes,
**caractérisé en ce que**
un dispositif de sécurité surveille une ouverture et une fermeture des freins.

12. Dispositif de commande d'un manipulateur, en particulier d'un robot,
**caractérisé en ce que**
le dispositif est configuré pour mettre en œuvre un procédé selon l'une quelconque des revendications précédentes.

13. Programme informatique, qui exécute un procédé selon l'une quelconque des revendications 1 à 11 lorsqu'il se déroule dans un dispositif selon la revendication 12.

14. Produit-programme d'ordinateur avec code de programme qui est stocké sur un support lisible par machine et qui comprend un programme informatique selon la revendication 13.
